# EUROPÄISCHE PATENTSCHRIFT

(11) **EP 1 213 138 B1**
(45) Veröffentlichungstag und Bekanntmachung des Hinweises auf die Patenterteilung: **02.08.2006**
(21) Anmeldenummer: 01129033.5
(22) Anmeldetag: 06.12.2001
(51) Int. Cl.: B32B 27/32, B29C 47/00

(54) **Verfahren zum Herstellen einer Verbundfolie**
Process for making a multilayered film
Procédé de fabrication d'une feuille stratifiée

(30) Priorität: 06.12.2000 DE 10060954
(43) Veröffentlichungstag der Anmeldung: 12.06.2002
(73) Patentinhaber: Huhtamaki Deutschland GmbH & Co. KG, 91301 Forcheim (DE)
(72) Erfinder: Walcher, Tobias Dr., 91301 Forchheim (DE)
(74) Vertreter: Hutzelmann, Gerhard

(56) Entgegenhaltungen:
- EP-A- 0 518 542
- EP-A- 0 649 737
- EP-A- 0 838 293
- EP-A- 0 844 077
- EP-A- 0 920 989
- EP-A- 0 968 816
- EP-A- 0 968 817
- EP-A- 0 968 818
- EP-A- 0 968 819
- US-A- 5 583 192
- PATENT ABSTRACTS OF JAPAN vol. 1999, no. 08, 30. Juni 1999 (1999-06-30) & JP 11 070624 A (KISHIMOTO AKIRA), 16. März 1999 (1999-03-16)

## Beschreibung

Die Erfindung bezieht sich auf ein Verfahren zum Herstellen einer Verbundfolie mit wenigstens einer Schicht aus Cycloolefin-Copolymer (COC-Schicht).

Cycloolefin-Folien haben hervorragende Eigenschaften als Wasserdampf-Sperrschicht; sie lassen sich aber aufgrund ihrer hoher Sprödigkeit nicht ohne weiteres mit anderen Materialien oder gegen sich selbst siegeln oder tiefziehen.

Stand der Technik ist ein Verfahren zum Herstellen einer tiefziehfähigen Verbundfolie mit wenigstens einer Schicht aus Cycloolefin-Copolymer, die wenigstens einseitig mit einer Schicht aus einem Polyolefin versehen ist. Derartige Verfahren sind aus der EP-A-0 649 737, EP-A-0 844 077, EP-A-0 920 989, EP-A-0 518 542, EP-A-0 968 817, EP-A-0 968 816, EP-A-0 968 818, JP-A-11070624, EP-A-0 968 819 und der EP-A-0838 293 bekannt.

Der Erfindung liegt die Aufgabe zugrunde ein Verfahren aufzuzeigen, mit dem eine Folie herstellbar ist, welche leicht und sicher tiefziehbar ist.

Diese Aufgabe wird erfingdungsgemäß dadurch gelöst, daß für dieses Polyolefin ein Plastomer mit einer Dichte zwischen 0,87 bis 0,89 g/cm³, ein VLDPE mit einer Dichte zwischen 0,880 bis 0,910 g/cm³ oder ein MDPE mit einer Dichte zwischen 0,930 bis 0,946 g/cm³ vorgesehen ist.

Polyolefin ist sowohl sehr gut tiefzuziehen als auch gut siegelbar. Diese Eigenschaften werden bei der erfindungsgemäßen Verbindung wenigstens einer Polyolefin-Schicht mit der COC-Schicht wenigstens teilweise übertragen, ohne daß diese ihre eigenen positiven Eigenschaften verliert. Darüber hinaus wird insbesondere die Fettempfindlichkeit der COC-Folie damit eleminiert. Durch die Verwendung einer Polyolefinschicht mit der genannten Dichte ergeben sich besonders gute Eigenschaften des Gesamtverbundes beim Tiefziehen.

Als besonders vorteilhaft hat es sich dabei ergeben, wenn gemäß einer weiteren Ausgestaltung der Erfindung die COC-Schicht beiderseits mit einer Polyolefin-Schicht versehen wird.

Durch die beiderseitige Einbettung der COC-Schicht mit Polyolefin wird insbesondere die Tiefziehfähigkeit des Verbundes noch weiter verbessert. Die hohe Sprödigkeit der COC-Schicht wird dadurch egalisiert.

Eine weitere vorteilhafte Ausgestaltung der Erfindung ist dadurch gegeben, daß die COC-Schicht und die weiteren Schichten im Flachfolien-Extrusionsverfahren hergestellt werden.

Im Flachfolien-Extrusionsverfahren lassen sich derartige Verbundfolien besonders günstig herstellen.

Gemäß einer weiteren Ausgestaltung der Erfindung ist es jedoch auch möglich, daß die COC-Schicht und die weiteren Schichten im Extrusions-Blasverfahren hergestellt werden.

Sehr günstige Folieneigenschaften ergeben sich, wenn gemäß einer weiteren Ausgestaltung der Erfindung dem Extrusionsverfahren ein Reckverfahren der Verbundfolie nachgeschaltet wird.

Ebenfalls sehr vorteilhaft ist es, wenn gemäß einer weiteren Ausgestaltung der Erfindung die Deckschichten über Haftvermittler-Schichten mit der COC-Schicht verbunden werden.

Durch den Einsatz von Haftvermittlerschichten können nahezu beliebige Polyolefine als Deckschichten für die COC-Schicht eingesetzt werden.

Es ist gemäß einer Ausgestaltung der Erfindung möglich, daß als Deckschicht VLDPE mit einer Dichte von 0,880 bis 0,910 eingesetzt wird.

Eine weitere vorteilhafte Ausgestaltung der Erfindung ist dadurch gekennzeichnet, daß der zwischen der COC-Schicht und der Deckschicht vorgesehene Haftvermittler aus einem linearen Polyethylen besteht.

Mit einem Haftvermittler aus linearem Polyethylen ist für die Auswahl der Deckschicht ein weiter Bereich gegeben.

Gemäß einer vorteilhaften weiteren Ausgestaltung der Erfindung kann das lineare Polyethylen über Copolymerisate modifiziert sein.

Dabei hat es sich als besonders vorteilhaft ergeben, wenn gemäß einer weiteren Ausgestaltung der Erfindung anhydridmodifizierte Ethylenvinylacetate zur Modifikation verwendet werden.

Es ist jedoch auch möglich, daß erfindungsgemäß Ethylenacrylsäuren zur Modifikation eingesetzt werden.

Eine weitere vorteilhafte Ausgestaltung der Erfindung ist dadurch gekennzeichnet, daß Polyolefin-Elastomere mit einem Dichtebereich von 0,860 bis 0,914 g/cm³ zur Modifikation eingesetzt werden.

Als sehr vorteilhaft hat es sich ergeben, wenn gemäß einer weiteren Ausgestaltung der Erfindung das Cycloolefin-Copolymer eine Dichte von etwa 1,02 g/cm³ aufweist.

Dabei ist es besonders vorteilhaft, wenn erfindungsgemäß die Melt Flow Indices des COC zwischen 1,0 und 10 (230°C/2,16kg) liegen.

Bei einem Ausführungsbeispiel der Erfindung wird ein Folienverbund im Cast-Verfahren hergestellt. Ein Breitschlitz-Extruder mit fünf Extrudern ist für das Herstellen des Folienverbundes vorgesehen. Dabei ist der mittlere Extruder für die Cycloolefin-Copolymer-Schicht vorgesehen. Die beiden äußeren Extruder geben dagegen das Deckschichtmaterial ab. Zwischen dem mittleren Extruder und den beiden äußeren Extrudern liegen weitere Extruder, welche für den jeweiligen Haftvermittler vorgesehen sind.

Diese fünf Extruder sind an einen gemeinsamen Feedblock angeschlossen, wo die Materialströme zusammengeführt werden und von wo sie zu einer gemeinsamen Austrittsdüse gelangen, aus der das fertige Coextrudat austritt.

Als Haftvermittler ist ein lineares Polyethylen vorgesehen, das über Copolymerisate modifiziert ist.

Durch diese beiden Deckschichten, die über den jeweiligen Haftvermittler fest mit der innenliegenden Cycloolefin-Copolymer-Schicht verbunden sind, kann die Verbundfolie sehr gut tiefgezogen werden, obwohl dies mit einer COC-Folie alleine nur bedingt möglich ist.

Als Deckschichten können gleiche oder auf beiden Seiten unterschiedliche Polyolefine verwendet werden.

Die folgenden Deckschichtmaterialien konnen infrage:

| | |
|---|---|
| VLDPE | Dichte 0,880 bis 0,910 g/cm³ |
| MDPE | Dichte 0,930 bis 0,946 g/cm³ |
| Plastomer | Dichte 0,0,87 bis 0,89 g/cm³ |

Als Haftvermittler können vorallem eingesetzt werden:
Lineares Polyethylen;
über Copolymere modifiziertes Polyethylen;
über anhydridmodifizierte Ethylenvinylacetate modifiziertes PE;
über Ethylenacrylsäuren modifiziertes PE;
über Polyolefon-Elastomere mit einem Dichtebereich von 0,860 bis 0,914 g/cm³ modifiziertes Polyethylen.

Das eingesetzte Cycloolefin-Copolymer hat eine Dichte von etwa 1,02 g/cm³ und die Melt Flow Indices liegen zwischen 1,0 und 10 (230°C/2,16kg)

Sowohl bei den Deckschichten als auch bei den Haftvermittlern sind verschiedene Auswahlmöglichkeiten gegeben, die auch weitere Materialien beinhalten.

So ist es denkbar, daß als Deckschicht für das COC MDPE vorgesehen wird, das eine Dichte von 0,930 bis 0,946 aufweist.

Desweiteren kann als Deckschicht ein Plastomer, mit einer Dichte von 0,87 bis 0,89, vorgesehen sein.

## Patentansprüche

1. Verfahren zum Herstellen einer tiefziehfähigen Verbundfolie mit wenigstens einer Schicht aus Cycloolefin-Copolymer, wobei die Cycloolefin-Copolymer-Schicht wenigstens einseitig mit einer Schicht aus einem Polyolefin versehen ist, **dadurch gekennzeichnet, daß** für dieses Polyolefin ein Plastomer mit einer Dichte zwischen 0,87 bis 0,89 g/cm³, ein VLDPE mit einer Dichte zwischen 0,880 bis 0,910 g/cm³ oder ein MDPE mit einer Dichte zwischen 0,930 bis 0,946 g/cm³ vorgesehen ist.

2. Verfahren nach Anspruch 1, **dadurch gekennzeichnet, daß** die Cycloolefin-Copolymer-Schicht beiderseits mit einer Polyolefm-Schicht versehen ist.

3. Verfahren nach Anspruch 1 oder 2, **dadurch gekennzeichnet, daß** die Cycloolefin-Copolymer-Schicht und die weiteren Schichten im Flachfolien-Extrusionsverfahren hergestellt sind.

4. Verfahren nach Anspruch 1 oder 2, **dadurch gekennzeichnet, daß** die Cycloolefin-Copolymer-Schicht und die weiteren Schichten im Extrusions-Blasverfahren hergestellt sind.

5. Verfahren nach einem der vorhergehenden Ansprüche, **dadurch gekennzeichnet, daß** dem Extrusionsverfahren ein Reckverfahren der Verbundfolie nachgeschaltet ist.

6. Verfahren nach einem der vorhergehenden Ansprüche, **dadurch gekennzeichnet, daß** die Deckschichten über Haftvermittler-Schichten mit der Cycloolefin-Copalymer-Schicht verbunden sind.

7. Verfahren nach einem der vorhergehenden Ansprüche, **dadurch gekennzeichnet, daß** der zwischen der Cycloolefin-Copolymer-Schicht und der Dickschicht vorgesehene Haftvermittler aus einem linearen Polyethylen besteht.

8. Verfahren nach Anspruch 7, **dadurch gekennzeichnet, daß** das lineare Polyethylen über Copolymerisate modifiziert ist.

9. Verfahren nach Anspruch 8, **dadurch gekennzeichnet, daß** anhydridmodifizierte Ethylenvinylacetate zur Modifikation verwendet werden.

10. Verfahren nach Anspruch 8, **dadurch gekennzeichnet, daß** Ethylenacrylsäuren zur Modifikation eingesetzt werden.

11. Verfahren nach Anspruch 8, **dadurch gekennzeichnet, daß** Polyolefin-Elastomere mit einem Dichtebereich von 0,860 bis 0,914 g/cm³ zur Modifikation eingesetzt werden,

12. Verfahren nach einem der vorhergehenden Ansprüche, **dadurch gekennzeichnet, daß** das Cycloolefin-Copolymer eine Dichte von etwa 1,02 g/cm³ aufweist.

13. Verfahren nach einem der vorhergehenden Ansprüche, **dadurch gekennzeichnet, daß** die Melt Flow Indices des Cycloolefin-Copolymer zwischen 1,0 und 10 dg/min bei 230°C und 2,16 kg liegen.

## Claims

1. Process for the production of a thermoformable multilayer film with at least one layer made from cycloolefin copolymer, where the cycloolefin copolymer layer is provided on at least one side with a polyolefin layer, wherein a plastomer with a density of between 0.87 and 0.89 g/cm³, a VLDPE with a density of between 0.880 and 0.910 g/cm³ or an MDPE with a density of between 0.930 and 0.946 g/cm³ is provided for this polyolefin.

2. Process according to claim 1, wherein the cycloolefin copolymer layer is provided with a polyolefin layer on both sides.

3. Process according to claim 1 or 2, wherein the cycloolefin copolymer layer and the other layers are produced by the cast film extrusion process.

4. Process according to claim 1 or 2, wherein the cycloolefin copolymer layer and the other layers are produced by the blown film extrusion process.

5. Process according to one of the previous claims, wherein a process for orienting the multilayer film is carried out after the extrusion process.

6. Process according to one of the previous claims, wherein the top layers are bonded to the cycloolefin copolymer layer via tie layers.

7. Process according to one of the previous claims, wherein the tie layer provided between the cycloolefin copolymer layer and the top layer consists of a linear polyethylene.

8. Process according to claim 7, wherein the linear polyethylene is modified by means of copolymers.

9. Process according to claim 8, wherein anyhdride-modified ethylene vinyl acetates are used for modification purposes.

10. Process according to claim 8, wherein ethylene acrylic acids are used for modification purposes.

11. Process according to claim 8, wherein polyolefin elastomers with a density range between 0.860 and 0.914 g/cm³ are used for modification purposes.

12. Process according to one of the previous claims, wherein the cycloolefin copolymer has a density of about 1.02 g/cm³.

13. Process according to one of the previous claims, wherein the melt flow indices of the cycloolefin copolymer are between 1.0 and 10 dg/min. at 230° C and 2.16 kg.

## Revendications

1. Procédé de fabrication d'une feuille stratifiée apte à l'emboutissage comportant au moins une couche de copolymère de cyclooléfine, dans lequel la couche de copolymère de cyclooléfine est munie au moins d'un côté d'une couche d'une polyoléfine, **caractérisé en ce que** pour cette polyoléfine, on prévoit un plastomère ayant une densité comprise entre 0,87 et 0,89 g/cm³, un VLDPE ayant une densité comprise entre 0,880 et 0,910 g/cm³ ou un MDPE ayant une densité comprise entre 0,930 et 0,946 g/cm ³.

2. Procédé selon la revendication 1, **caractérisé en ce que** la couche de copolymère de cyclooléfine est munie des deux côtés d'une couche de polyoléfine.

3. Procédé selon la revendication 1 ou 2, **caractérisé en ce que** la couche de copolymère de cyclooléfine et les autres couches sont fabriquées selon un procédé d'extrusion de feuilles plates.

4. Procédé selon la revendication 1 ou 2, **caractérisé en ce que** la couche de copolymère de cyclooléfine et les autres couches sont fabriquées selon un procédé d'extrusion-soufflage.

5. Procédé selon l'une des revendications précédentes, **caractérisé en ce que** le procédé d'extrusion de la feuille composite est suivi d'un procédé d'étirage de la feuille stratifiée.

6. Procédé selon l'une des revendications précédentes, **caractérisé en ce que** les couches de recouvrement sont reliées à la couche de copolymère de cyclooléfine par l'intermédiaire de couches d'agent adhésif.

7. Procédé selon l'une des revendications précédentes, **caractérisé en ce que** l'agent adhésif prévu entre la couche de copolymère de cyclooléfine et la couche de recouvrement est un polyéthylène linéaire.

8. Procédé selon la revendication 7, **caractérisé en ce que** le polyéthylène linéaire est modifié par des copolymères.

9. Procédé selon la revendication 8, **caractérisé en ce que** l'on utilise pour la modification des éthylènevinylacétates modifiés par un anhydride.

10. Procédé selon la revendication 8, **caractérisé en ce que** l'on utilise pour la modification des acides éthylène-acryliques.

11. Procédé selon la revendication 8, **caractérisé en ce que** l'on utilise pour la modification des élastomères de polyoléfine ayant une plage de densité comprise entre 0,860 et 0,914 g/cm³.

12. Procédé selon l'une des revendications précédentes, **caractérisé en ce que** le copolymère de cyclooléfine présente une densité d'environ 1,02 g/cm³.

13. Procédé selon l'une des revendications précédentes, **caractérisé en ce que** l'indice de fluage du copolymère de cyclooléfine est compris entre 1,0 et 10 dg/min à 230 °C et 2,16 kg.
